# EUROPEAN PATENT SPECIFICATION

(11) **EP 2 418 353 B1**
(45) Date of publication and mention of the grant of the patent: **16.07.2014**
(21) Application number: 11174688.9
(22) Date of filing: 20.07.2011
(51) Int. Cl.: F01D 5/14, F01D 5/28, B21D 26/02, B23P 15/02

(54) **An aerofoil, an aerofoil sub-assembly and a method of making the same**
Tragfläche, Tragflächenuntergruppe und Verfahren zu deren Herstellung
Surface portante, sous-ensemble de surface portante et son procédé de fabrication

(30) Priority: 09.08.2010 GB 201013305
(43) Date of publication of application: 15.02.2012
(73) Proprietor: Rolls-Royce plc, London SW1E 6AT (GB)
(72) Inventor: Goldfinch, Keith, Bristol, BSD8 4TE (GB); Strother, Oliver, Leeds, LS16 7LP (GB)
(74) Representative: Roberts, Nicholas John

(56) References cited:
- EP-A1- 2 147 731
- EP-A2- 2 119 871
- GB-A- 2 397 855
- US-A- 4 522 860
- US-A- 5 941 446

## Description

The invention relates to an aerofoil sub-assembly for use in the formation of a hollow aerofoil, particularly an aerofoil for use as a fan blades in a jet engine. The invention also relates to an aerofoil made from the sub-assembly and a method of making such an aerofoil.

The invention concerns hollow aerofoil blades manufactured by a diffusion bonding and blow forming process and especially concerns an aerofoil, an aerofoil sub-assembly and a method of manufacturing the same.

In the simplest form of a blow forming manufacturing process a hollow component is formed of two thin metal skins see e.g. EP 2 147 731 joined along their peripheral edges, which are then heated in a die to a temperature at which they can be blow formed to the shape of the cavity of the die by internal gas pressure. To give the component strength an internal structure may be provided made up of one or more membranes sandwiched between the metal skins and selectively bonded to their inner faces and each other. In the blow forming step the inner membranes deform into the shape of a chosen support structure. In more complex blow forming processes alloys may be used which have super plastic characteristics within a given temperature range. The articles are heated to the within the superplastic range before pressurising to superplastically deform the article. The use of superplastic materials affords greater control to internal structures as the article is inflated.

Hollow aerofoil blades made in this way, that is with this kind of internal structure, are found to have regions of high rigidity interspersed with regions of lower rigidity. For example, under impact in the chordal direction of a blade the leading and trailing edge regions behave as fundamentally solid regions. Where internal spars, or other support, is bonded to the inner surface the skin exhibits higher strength than other intermediate regions. Therefore if the aerofoil is struck by a foreign object, e.g. during a bird strike, the relatively weaker regions can tend to crumple. As a counter and to increase strength the thickness of the outer panels is increased at a penalty of increased mass and weight.

It is an objective of the present invention to provide an improved internal structure, and in particular to provide a structure located between regions of higher strength capable of resisting buckling under impact loads without a penalty of increased weight.

A method for forming an aerofoil can comprise the steps of: providing a first skin panel, providing a first web-forming membrane adjacent the first panel, selectively bonding part of the web-forming membrane to parts of the first panel, providing a second skin panel, providing a second web-forming membrane, selectively bonding parts of the second web-forming membrane to parts of the second skin panel, selectively bonding parts of the first web forming membrane to parts of the second structure-forming membrane, arranging the panels together so that the first skin panel overlays the second skin panel with the first and second web-forming membranes arranged therebetween to define an aerofoil sub-assembly, heating the aerofoil sub-assembly to a temperature and inflating the aerofoil sub-assembly to draw the first and second skin panels apart and to cause the first and second web-forming membranes to form webs internally of the aerofoil.

According to the present invention there is provided an aerofoil sub-assembly of a multi-layer construction comprising first and second skin panels which together define the external surfaces of the aerofoil and aerofoil leading and trailing edges, and lying between the skin panels and two or more web-forming membranes which comprise a multiplicity of fingers trapped between the first and second panels at one of the edges and which extend away from the edge region.

Preferably the web-forming membrane comprises a comb-like structure in which the multiplicity of fingers project from a spine portion at a panel edge and the fingers extend from the spine portion and have a proximal portion and a distal portion angled thereto in the shape of a dog-leg, and wherein the proximal portions of the fingers of a web-forming membrane subtend an oblique angle relative to the spine of the web.

Furthermore it is preferred that the distal portion of the fingers lie in a direction perpendicular to the spine of the web-forming membrane and alternate ones of the fingers are bonded to opposite skin panels.

These and further features of the invention will be described in greater detail below, in which reference by way of example will be made to the accompanying drawings illustrating the invention, in which:
Figure 1 shows a view of a cross-section through a hollow aerofoil blade manufactured by a diffusion bond and inflate process;
Figure 2 shows a detail view of an exploded view of an aerofoil sub-assembly for a diffusion bond and inflate process.
Figure 3 shows a detail view of the completed aerofoil blade corresponding to the sub-assembly of Figure 2.

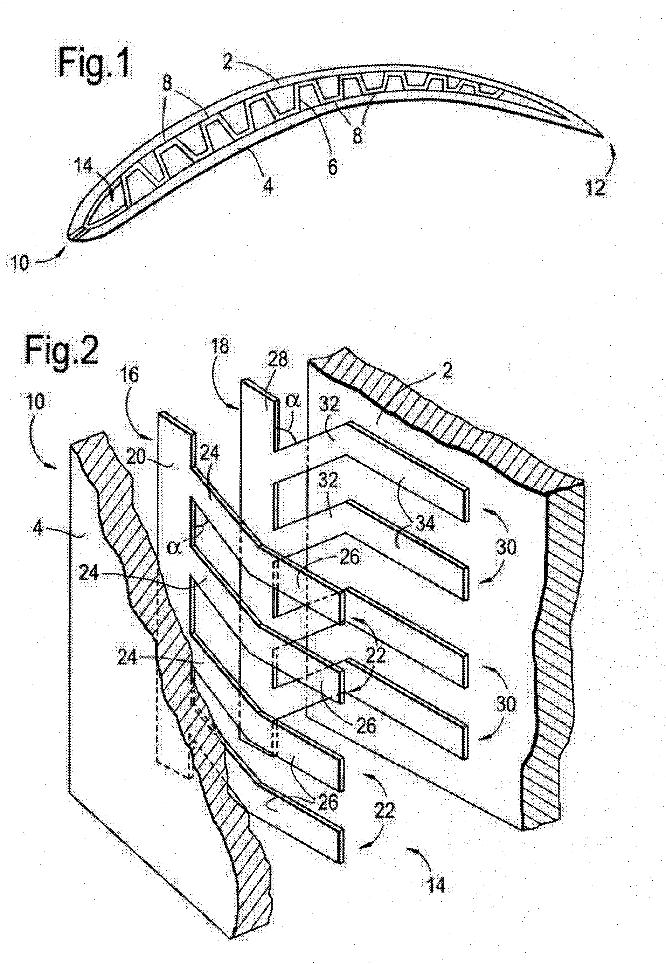

Referring now to the drawings, Figure 1 shows a cross-section through a wide-chord compressor or fan blade at approximately mid blade height. Typically, in its simplest form, such a blade is manufactured by a diffusion bonded and inflate process in which a multi-layer sub-assembly of thin titanium sheets are placed together in a mould. The assembly is vacuum purged, heated and then pressurized internally to deform the outer skin panels to conform to the internal shape of the mould cavity. Diffusion bonding generally can be carried out at the same temperatures and pressures used in the inflation process, providing the surface where bonding is desired are metallurgically clean. Where bonding is not required, a preventive medium, generally referred to in the art as "stop off" is applied selectively to at least one of the surfaces before assembly into the mould. By this method internal bracing structures may be created within the finished article.

The blade illustrated in Figure 1 comprises two outer skin panels 2, 4 of titanium and an inner support/stiffening structure of zig-zag profile, generally indicated at 6, also of titanium. The support structure 6 was created from a third panel or sheet of titanium sandwiched between the outer skin panels 2, 4. Onto the opposite planar surfaces of the sheet a pattern of "stop-off" material was deposited in regions where the sheet 6 was not to be bonded to either of the outer panels 2, 4. Subsequently during the manufacturing process the untreated regions become bonded, at points generally indicated at 8, to the inner faces of the outer panels and, as during the expansion phase of the process the sheet 6 is formed into the zig-zag profile of the internal support structure.

Although the blade structure described thus far is light and strong, at the limit, as for example under foreign object impact loads, e.g. a bird strike, the leading edge region of the blade is liable to crumple. It is thought this occurs due to a lack of chordal support immediately behind the leading edge 10. The trailing edge 12 can exhibit the same characteristics, but is less likely to receive a direct impact. The present invention is intended to provide additional support to these regions, in particular to the leading edge 10 as shown at 14.

Figure 2 shows a detail view of part of the components of additional support structure 14 of Figure 1. The stiffening structure 14 is formed by two titanium web-forming membranes 16, 18 placed between the two outer skin panels 2, 4. The membranes 16, 18 are made from thin titanium sheet and each has a comb-like structure comprising a spine or base portion of rectangular outline from one edge of which there extends a multiplicity of fingers in the plane of the web. The first web-forming membrane 16 comprises a spine or base part 20 of rectangular outline from one long edge of which extend a multiplicity of fingers 22 spaced apart at regular intervals. Each of the fingers 22 has a "dog-leg" shape consisting of a proximal section 24, which subtends an oblique angle (α) relative to the spine part 20 of the web, and an end or distal portion 26, angled relative to the first part 24 to continue in a direction perpendicular to the spine part 20.

The second web-forming membrane 18 also comprises a spine or base part 28 of rectangular outline and has a multiplicity of fingers 30 extending from the edge of part 28 and spaced apart at regular intervals. In this case, however, the proximal part 32 of each finger is inclined in the opposite direction to the fingers 22 of the first membrane 16. The proximal portions 32 of fingers 30 are formed at an angle (180°- α) relative to the edge of the base portion. Therefore the proximal portions 24, 32 of the web membrane fingers 22, 30 are angled in opposite directions.

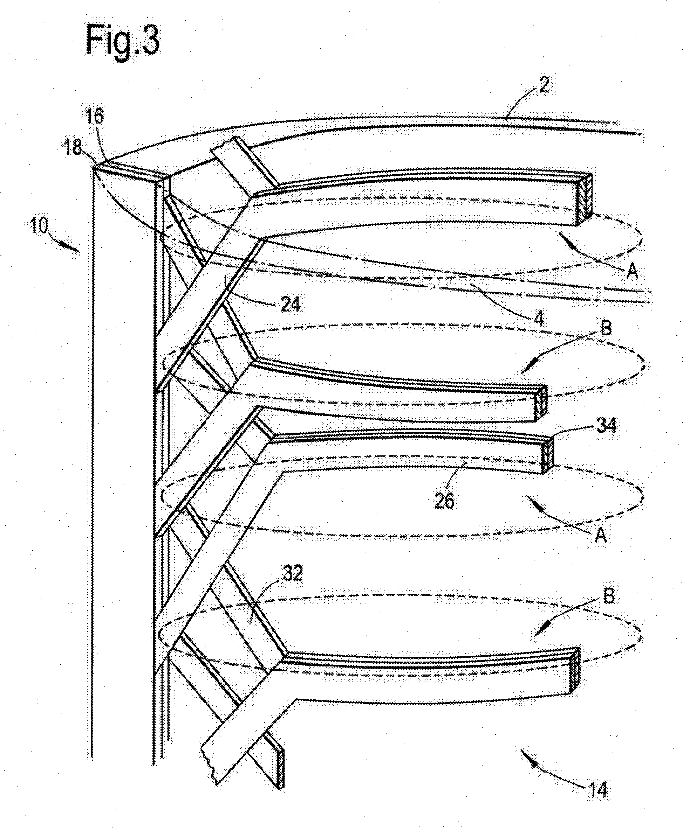

In a preferred method of manufacture the skin panels 2, 4 and web-forming membranes 16, 18 are placed in a stack between tooling pieces (not shown). In accordance with the present invention the membranes 16, 18 are placed face to face with the base parts 20, 28 in register and the distal parts 26, 34 of the fingers 22, 30 overlying one another. In this position the proximal parts 24, 32 of the fingers are interdigitated and of sufficient length so that the fingers cross-over each other. In order to produce the reinforcing parts of the invention, as illustrated in Figure 3, the overlying finger parts 26, 34 are bonded together and alternately to the inner faces of opposite ones of the skin panels 2,4. Bonding stop-off material is applied selectively to those parts and surfaces not to be joined, so for example the angled, proximal portions of the fingers are coated with stop-off material on both sides to prevent unwanted bonding; the distal portions of the fingers for the top membrane have stop-off applied to top suface of alternate fingers and the distal portions of the fingers for the bottom membrane have stop-off applied to the bottom surface of the other fingers. On the other hand material capable of assisting bonding may be applied to other surfaces that it is desired to bond.

During a later phase of the process, that is after the bonding phase but while the metal remains at temperature, an inert gas at high pressure is introduced into the interior of the assembly and causes plastic deformation of the panels and membranes within the limits set by exterior tooling or mould. Bonded interfaces remain attached but other parts placed under tension expand up to the limits set by the tooling. Figure 3 illustrates in part cut-away view the leading edge region of an SPFDB blade showing the internal additional support structure created by deformation of the fingers of the web-forming membranes.

Thus, in the arrangement illustrated in Figure 3, at the regions indicated generally at A finger part 26 is bonded to the internal face of panel 2 and finger part 34 is bonded to the exposed face of finger part 26. At the regions indicated at B, finger part 34 is bonded to the internal face of skin panel 4 and finger part 26 is bonded to the exposed face of finger part 34. The forward rectangular base parts 16, 18 are sandwiched between the forward perimeter of panels 2, 4 and form an integral part of the blade leading edge 10. Meanwhile the portions 24, 32 of the fingers remain unattached to either of the panels and are pulled towards the panel to which the respective finger 26, 34 is attached. Thus, the proximal end 32 of the finger 34 attached at region B crosses over the proximal end 24 of the finger 26 attached at region A. Similarly, the proximal end 24 of the finger 26 attached at region A crosses over the proximal end 32 of the finger 34 attached at region B. The crossing creates a mesh type structure with the complex geometries of these intertwined and bonded finger portions provide a transition zone between the stiff leading edge and the main hollow part of the blade. In addition the design provides an unrestricted gas path between cells, at least in the leading edge region of the blade thereby obviating a requirement to provide through bores to prevent trapped gas pockets that would disrupt the inflation process.

The invention provides a region of graded strength between the edge being reinforced and the nearest adjacent spar, or load carrying member, in order to reduce the chance of buckling occurring upon foreign object impact on the edge. Thus, the invention may be employed to reinforce an aerofoil leading or trailing edge or both. Alternatively, where inflation of the blade occurs through an aperture in the blade tip the edge against which the intertwining occurs may be the blade tip. The thickness of a skin panel may be reduced, thus reducing weight while maintaining the strength of the structure. In one embodiment of the invention a preferred structure is formed of two outer panels, of approximately 10mm thickness, and two internal membranes, typically each having a selected thickness of between 0.5mm and 2.0mm. It is possible, therefore, to adapt an existing aerofoil design to incorporate the invention without increasing the overall thickness of the reinforced edge, that is the distance between the aerofoil surfaces on the pressure and suction sides of the aerofoil blade. For example, the invention may be employed in the structure disclosed in our co-pending GB Patent Application No 0813539.4 but it may also be employed in other aerofoil structures of hollow construction.

Although each finger has been shown to have a single dog-leg it is conceivable that each distal portion of the fingers of the membranes may be divided into multiple regions having one or more dog-legs which cross over the dog-legs of the other membrane. In this way the inflation of the blade may be further improved.

## Claims

1. An aerofoil sub-assembly of multi-layer construction comprising first and second skin panels (2,4) which together define the external surfaces of the aerofoil and aerofoil leading and trailing edges, **characterised in that** lying between the skin panels are located two or more web-forming membranes (16, 18) which comprise a multiplicity of fingers (22, 30) trapped between the first and second panels at one of the edges and which extend away from the edge region.

2. An aerofoil sub-assembly according to claim 1, comprising first and second web-forming membranes wherein each web-forming membrane comprises a comb-like structure in which the multiplicity of fingers project from a spine portion (20, 28) at a panel edge.

3. An aerofoil sub-assembly according to claim 2, wherein part of the first web-forming membrane is bonded to part of the first panel and part of the second web-forming membrane is bonded to part of the second panel.

4. An aerofoil sub-assembly according to claim 3 in which the fingers of the first and second membranes are overlaid.

5. An aerofoil sub-assembly according to claim 2, wherein the fingers of the web-forming membranes extend from a spine portion and have a proximal portion (24, 32) and a distal portion (26, 34) angled thereto in the shape of a dog-leg.

6. An aerofoil sub-assembly according to claim 5, wherein the proximal portions (24, 32) of the fingers of a web-forming membrane subtend an oblique angle relative to the spine (20, 28) of the web.

7. An aerofoil sub-assembly according to either of claims 5 or 6, wherein the proximal portions of the fingers of the first and second web-forming members are angled in opposite directions.

8. An aerofoil sub-assembly according to any of claims 5, 6 or 7, wherein the distal portion of the fingers lie in a direction perpendicular to the spine of the web-forming membrane.

9. An aerofoil sub-assembly according to any of claims 5 to 8 wherein the web-forming membranes are assembled such that the distal portions of the fingers of one membrane overlap those of the other membrane and are diffusion bonded together and to a skin panel.

10. An aerofoil sub-assembly according to claim 9, wherein alternate fingers are bonded to opposite skin panels.

11. An aefofoil sub-assembly according to claim 5, wherein the distal portion comprises a first distal portion immediately adjoining the proximal portion and a second distal portion comprising one or more further dog-legs.

## Patentansprüche

1. Tragflächen-Untergruppe aus einer mehrschichtigen Konstruktion, umfassend erste und zweite Außenhautpanels (2, 4), die zusammen die äußeren Oberflächen der Tragfläche und Tragflächenanström- und Tragflächenabströmkanten definieren, **dadurch gekennzeichnet, dass** zwischen den Außenhautpanels zwei oder mehr bahnbildende Membrane (16, 18) angeordnet sind, die eine Mehrzahl von Fingern (22, 30) umfassen, die zwischen den ersten und zweiten Panels an einer der Kanten eingeschlossen sind und sich von der Kantenregion weg erstrecken.

2. Tragflächen-Untergruppe nach Anspruch 1, wobei diese erste und zweite bahnbildende Membrane umfasst, wobei jede bahnbildende Membran eine kammartige Struktur umfasst, wobei die Mehrzahl von Fingern von einem Rückenabschnitt (20, 28) an einer Panelkante vorstehen.

3. Tragflächen-Untergruppe nach Anspruch 2, wobei ein Teil der ersten bahnbildenden Membran mit einem Teil des ersten Panels verbunden ist, und wobei ein Teil der zweiten bahnbildenden Membran mit einem Teil des zweiten Panels verbunden ist.

4. Tragflächen-Untergruppe nach Anspruch 3, wobei sich die Finger der ersten und zweiten Membrane überlagern.

5. Tragflächen-Untergruppe nach Anspruch 2, wobei sich die Finger der bahnbildenden Membrane von einem Rückenabschnitt erstrecken und einen proximalen Abschnitt (24, 32) und einen distalen Abschnitt (26, 34) aufweisen, die dazu in Form einer Biegung in einer Winkelanordnung vorgesehen sind.

6. Tragflächen-Untergruppe nach Anspruch 5, wobei die proximalen Abschnitte (24, 32) der Finger einer bahnbildenden Membran einen schrägen Winkel im Verhältnis zu dem Rücken (20, 28) der Bahn schneiden.

7. Tragflächen-Untergruppe nach einem der Ansprüche 5 oder 6, wobei die proximalen Abschnitte der Finger der ersten und zweiten bahnbildenden Elemente in entgegengesetzten Richtungen angewinkelt sind.

8. Tragflächen-Untergruppe nach einem der Ansprüche 5, 6 oder 7, wobei der distale Abschnitt der Finger in einer Richtung liegt, die senkrecht zu dem Rücken der bahnbildenden Membran verläuft.

9. Tragflächen-Untergruppe nach einem der Ansprüche 5 bis 8, wobei die bahnbildenden Membrane so montiert sind, dass die distalen Abschnitte der Finger einer Membran die der anderen Membran überlappen und miteinander und mit einem Außenhautpanel eine Diffusionsschweißverbindung aufweisen.

10. Tragflächen-Untergruppe nach Anspruch 9, wobei wechselweise Finger mit entgegengesetzten Außenhautpanels verbunden sind.

11. Tragflächen-Untergruppe nach Anspruch 5, wobei der distale Abschnitt einen distalen Abschnitt umfasst, der unmittelbar an den proximalen Abschnitt angrenzt, sowie einen zweiten distalen Abschnitt, der eine oder mehrere weitere Biegungen umfasst.

## Revendications

1. Sous-ensemble de surface portante de construction multicouche comprenant des premier et second panneaux de revêtement (2, 4) qui, ensemble, définissent les surfaces externes de la surface portante et des bords avant et arrière de la surface portante, **caractérisé en ce qu'**il se trouve entre les panneaux de revêtement deux ou plusieurs membranes formant une bande (16, 18) qui comprennent une multiplicité de doigts (22, 30) piégés entre les premier et second panneaux au niveau de l'un des bords et qui s'étendent à l'opposé de la région de bord.

2. Sous-ensemble de surface portante selon la revendication 1, comprenant des première et seconde membranes formant une bande, dans lequel chaque membrane formant une bande comprend une structure en forme de peigne dans laquelle la multiplicité de doigts fait saillie d'une partie de dos (20, 28) au niveau d'un bord de panneau.

3. Sous-ensemble de surface portante selon la revendication 2, dans lequel une partie de la première membrane formant une bande est collée à une partie du premier panneau et une partie de la seconde membrane formant une bande est collée à une partie du second panneau.

4. Sous-ensemble de surface portante selon la revendication 3, dans lequel les doigts des première et seconde membranes sont superposés.

5. Sous-ensemble de surface portante selon la revendication 2, dans lequel les doigts des membranes formant une bande s'étendent à partir d'une partie de dos et ont une partie proximale (24, 32) et une partie distale (26, 34) coudée par rapport à celle-ci sous la forme d'une patte de chien.

6. Sous-ensemble de surface portante selon la revendication 5, dans lequel les parties proximales (24, 32) des doigts d'une membrane formant une bande sous-tendent un angle oblique par rapport au dos (20, 28) de la bande.

7. Sous-ensemble de surface portante selon la revendication 5 ou 6, dans lequel les parties proximales des doigts des premiers et seconds éléments formant une bande sont inclinées dans des directions opposées.

8. Sous-ensemble de surface portante selon l'une quelconque des revendications 5, 6 ou 7, dans lequel la partie distale des doigts se trouve dans une direction perpendiculaire au dos de la membrane formant une bande.

9. Sous-ensemble de surface portante selon l'une quelconque des revendications 5 à 8, dans lequel les membranes formant une bande sont assemblées de sorte que les parties distales des doigts d'une membrane chevauchent celles de l'autre membrane et sont collées par diffusion entre elles et à un panneau de revêtement.

10. Sous-ensemble de surface portante selon la revendication 9, dans lequel les doigts alternés sont collés à des panneaux de revêtement opposés.

11. Sous-ensemble de surface portante selon la revendication 5, dans lequel la partie distale comprend une première partie distale immédiatement adjacente à la partie proximale et une seconde partie distale comprenant une ou plusieurs autres pattes de chien.
